# EUROPEAN PATENT APPLICATION

(11) **EP 4 693 210 A1**
(43) Date of publication of application: **11.02.2026**
(21) Application number: 24780160.8
(22) Date of filing: 25.03.2024
(51) Int. Cl.: G06T 19/00, G06F 3/04845, G06F 3/04847

(54) **INFORMATION PROCESSING DEVICE, INFORMATION PROCESSING METHOD, PROGRAM, AND RECORDING MEDIUM**

(30) Priority: 30.03.2023 JP 2023055938
(71) Applicant: FUJIFILM Corporation, Tokyo Tokyo 106-8620 (JP)
(72) Inventor: KOBAYASHI Toshiki, Saitama-shi, Saitama 331-9624 (JP); KOBAYASHI Masaru, Saitama-shi, Saitama 331-9624 (JP); NISHIO Yuya, Saitama-shi, Saitama 331-9624 (JP); YAMAJI Kei, Saitama-shi, Saitama 331-9624 (JP)
(74) Representative: Dehns Germany Partnerschaft mbB
(86) International application number: PCT/JP2024/011655
(87) International publication number: WO 2024/204042

(57) **Abstract**

Provided are an information processing apparatus, an information processing method, a program, and a recording medium capable of smoothly acquiring an image according to a user's preference in a virtual space.

An information processing apparatus according to one embodiment of the present invention is an information processing apparatus including a processor, in which the processor is configured to execute acquisition processing of acquiring an image based on at least a part of display data constituting a display of a virtual space, and estimation processing of estimating, in a case where the image is assumed to be acquired in a real space, an acquisition condition of the image in the real space.

## Description

### BACKGROUND OF THE INVENTION

### 1. Field of the Invention

One embodiment of the present invention relates to an information processing apparatus, an information processing method, a program, and a recording medium.

### 2. Description of the Related Art

A technique of acquiring an image in a virtual space has already been developed, and an example of such a technique includes a technique described in JP2009-266159A.

In the technique disclosed in JP2009-266159A, image data for light reduction adjusted according to an angle of view of a virtual camera is superimposed on image data captured by the virtual camera to reflect the effect of peripheral light reduction according to the angle of view of the virtual camera on an image captured by the virtual camera. Therefore, it is possible to reproduce realistic peripheral light reduction even in the image captured by the virtual camera, as in an image captured by an actual camera.

### SUMMARY OF THE INVENTION

In recent years, the quality of an image acquired in a virtual space has been improved, and the number of users acquiring images in the virtual space has increased. On the other hand, it is desired to smoothly acquire an image according to a user's preference as the number of users increases.

One embodiment of the present invention has been made in view of the above circumstances, and an object of the present invention is to provide an information processing apparatus, an information processing method, a program, and a recording medium capable of smoothly acquiring an image according to a user's preference in a virtual space.

In order to achieve the object, the present invention has the following configurations.
[1] An information processing apparatus comprising a processor,
   in which the processor is configured to execute:
   acquisition processing of acquiring an image based on at least a part of display data constituting a display of a virtual space; and
   estimation processing of estimating, in a case where the image is assumed to be acquired in a real space, an acquisition condition of the image in the real space.
[2] The information processing apparatus according to [1],
   in which the image is a first image obtained by imaging in the virtual space, or a second image obtained by a record of a display screen of the virtual space.
[3] The information processing apparatus according to [1] or [2],
   in which the processor is configured to:
   in the estimation processing, estimate the acquisition condition of the image in the real space using a trained model generated by machine learning in advance.
[4] The information processing apparatus according to [2] or [3],
   in which the processor is configured to:
   in the acquisition processing, receive a first image setting condition for acquiring the first image; and
   in the estimation processing, estimate the acquisition condition of the first image in the real space based on at least one of the first image or the first image setting condition.
[5] The information processing apparatus according to [4],
   in which the processor is configured to:
   in the estimation processing, estimate the acquisition condition of the first image in the real space, using a trained model created by machine learning in advance, based on at least one of the first image or the first image setting condition.
[6] The information processing apparatus according to [4] or [5],
   in which the processor is configured to:
   in the estimation processing, estimate the acquisition condition of the first image in the real space, by an optical simulation using the first image setting condition and information related to a subject displayed in the first image.
[7] The information processing apparatus according to any one of [4] to [6],
   in which the processor is configured to further execute:
   after the acquisition condition of the first image is estimated in the real space in the estimation processing, first change reception processing of receiving a change to the estimated acquisition condition of the first image; and
   first display processing of displaying, on the display screen, a third image obtained by converting the first image, based on the acquisition condition after the change, after the first change reception processing.
[8] The information processing apparatus according to any one of [4] to [7],
   in which the processor is configured to further execute:
   after the acquisition condition of the first image is estimated in the real space in the estimation processing, second change reception processing of receiving a change to the first image setting condition; and
   second display processing of displaying, on the display screen, a fourth image obtained by converting the first image, based on the first image setting condition after the change, after the second change reception processing.
[9] The information processing apparatus according to [2],
   in which the processor is configured to:
   in the acquisition processing, receive a second image setting condition for acquiring the second image; and
   in the estimation processing, estimate the acquisition condition of the second image in the real space based on at least one of the second image or the second image setting condition.
[10] The information processing apparatus according to [9],
   in which the processor is configured to:
   in the estimation processing, estimate the acquisition condition of the second image in the real space, using a trained model created by machine learning in advance, based on at least one of the second image or the second image setting condition.
[11] The information processing apparatus according to [9] or [10],
   in which the processor is configured to:
   in the estimation processing, estimate the acquisition condition of the second image in the real space, by an optical simulation using the second image setting condition and information related to a subject displayed in the second image.
[12] The information processing apparatus according to any one of [9] to [11],
   in which the processor is configured to further execute:
   after the acquisition condition of the second image is estimated in the real space in the estimation processing, third change reception processing of receiving a change to the estimated acquisition condition of the second image; and
   third display processing of displaying, on the display screen, a fifth image obtained by converting the second image, based on the acquisition condition after the change, after the third change reception processing.
[13] The information processing apparatus according to any one of [9] to [12],
   in which the processor is configured to further execute:
   after the acquisition condition of the second image is estimated in the real space in the estimation processing, fourth change reception processing of receiving a change to the second image setting condition; and
   fourth display processing of displaying, on the display screen, a sixth image obtained by converting the second image, based on the second image setting condition after the change, after the fourth change reception processing.
[14] The information processing apparatus according to any one of [1] to [13],
   in which the processor is configured to:
   further execute saving processing of saving the acquired image in association with the acquisition condition of the image in the real space.
[15] An information processing method executed by a processor, the method comprising:
   acquisition processing of acquiring an image based on at least a part of display data constituting a display of a virtual space; and
   estimation processing of estimating, in a case where the image is assumed to be acquired in a real space, an acquisition condition of the image in the real space.
[16] A program for causing a computer to execute each piece of processing included in the information processing method according to [15].
[17] A computer-readable recording medium on which a program for causing a computer to execute each piece of processing included in the information processing method according to [15] is recorded.

According to one embodiment of the present invention, it is possible to provide the information processing apparatus, the information processing method, the program, and the recording medium capable of smoothly acquiring an image according to the user's preference in the virtual space.

### BRIEF DESCRIPTION OF THE DRAWINGS

FIG. 1 is a diagram showing an example of an outline of image acquisition according to one embodiment of the present invention.
FIG. 2 is a diagram showing an example of an outline of the image acquisition according to one embodiment of the present invention.
FIG. 3 is a diagram showing an example of an outline of the image acquisition according to one embodiment of the present invention.
FIG. 4 is a diagram showing an example of an outline of the image acquisition according to one embodiment of the present invention.
FIG. 5 is a diagram showing an example of an outline of the image acquisition according to one embodiment of the present invention.
FIG. 6 is a diagram showing a configuration example of an information processing system including an information processing apparatus according to one embodiment of the present invention.
FIG. 7 is a diagram for describing a function of the information processing apparatus according to one embodiment of the present invention.
FIG. 8 is a diagram conceptually showing estimation processing in the information processing apparatus according to one embodiment of the present invention.
FIG. 9 is a diagram conceptually showing image conversion processing in the information processing apparatus according to one embodiment of the present invention.
FIG. 10 is a diagram showing a procedure of an image acquisition flow according to one embodiment of the present invention.
FIG. 11 is a diagram showing a procedure of an image acquisition flow according to one embodiment of the present invention.
FIG. 12 is a diagram showing a procedure of an image acquisition flow according to one embodiment of the present invention.

### DESCRIPTION OF THE PREFERRED EMBODIMENTS

A specific embodiment of the present invention will be described with reference to drawings. However, the embodiment described below is merely an example for ease of understanding of the present invention, and is not intended to limit the present invention. Further, the present invention can be changed or improved from the embodiment described below without departing from the gist of the present invention. Further, the present invention includes an equivalent thereof.

In the present specification, the concept of "apparatus" includes a single apparatus that exerts a specific function in one apparatus, and includes a combination of a plurality of apparatuses that are distributed and present independently of each other and exert a specific function in cooperation (coordination) with each other.

Further, in the present specification, the term "image" is defined as "image data" unless otherwise specified. Examples of the image data may include image data of a non-reversible compression such as a joint photographic experts group (JPEG) format, image data of a reversible compression such as a graphics interchange format (GIF) or a portable network graphics (PNG) format, and three-dimensional image data used on a web browser such as a virtual reality modeling language (VRML) format.

Further, the image data may include accessory information indicating information such as a file name, an imaging date and time, and an imaging location.

Further, in the present specification, the term "user" is a user who uses an information processing apparatus according to the embodiment of the present invention. The use of the information processing apparatus is to use a function of the information processing apparatus, and includes using the function of the information processing apparatus through a device (for example, user terminal) communicable with the information processing apparatus, in addition to a direct operation of the information processing apparatus.

### <<Overview of main image acquisition>>

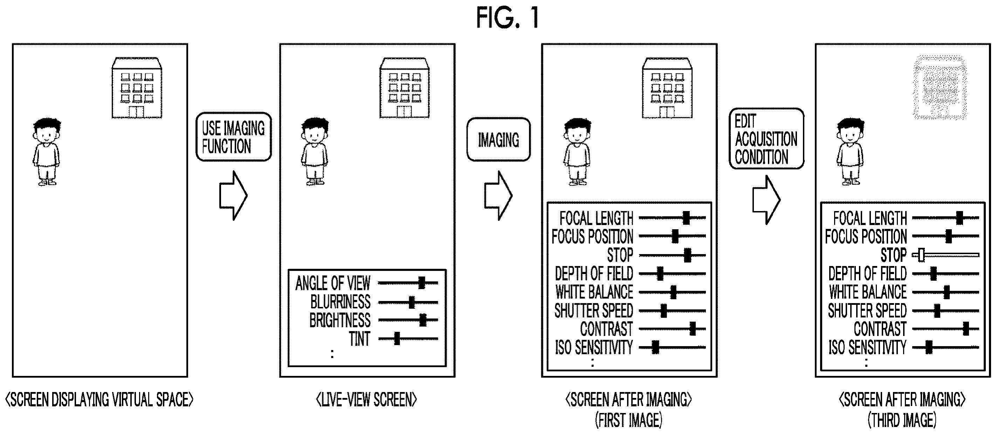

Image acquisition (hereinafter, main image acquisition) performed using the information processing apparatus and an information processing method according to one embodiment of the present invention will be described with reference to FIGS. 1 to 5.

In the main image acquisition, the same operation as an operation performed in a real space is performed in a virtual space to acquire an image in the virtual space. The "operation performed in real space" is, for example, an imaging operation using a real camera.

Four representative examples in the main image acquisition will be described with reference to FIGS. 1 to 5.

The user may freely select which example is performed in the main image acquisition.

### (First example)

FIG. 1 shows a transition of a display screen displayed on a user terminal, and the display screen transitions in order from a left side to a right side of FIG. 1.

In using the main image acquisition, the user first activates an application program for image acquisition (hereinafter, image acquisition application) that has been installed in advance on the user terminal. In a case where the user is authenticated, the display screen of the user terminal is switched to a scene in the virtual space. For example, the user operates a user's own avatar in the virtual space to select a location where imaging is performed in the virtual space. A first display screen from the left shown in FIG. 1 is a screen for displaying the virtual space, and shows an imaging location selected by the user to acquire an image.

The first display screen from the left shown in FIG. 1 is a view seen from the user's own avatar, and the display screen displays an avatar of another person and a building object.

The user determines the imaging location, and then starts imaging preparation by using an imaging function (virtual camera) provided in the image acquisition application. A second display screen from the left shown in FIG. 1 shows a live-view screen after the virtual camera is activated.

The "live-view screen" means an image captured in real time by the virtual camera at a predetermined angle of view in the virtual space that changes dynamically. The virtual space is obtained by reproducing a real space by computer graphics (CG) or the like. A person, a thing, and the like present in the virtual space move in the same manner as in the real space, and a landscape in the virtual space changes according to the same rule as in the real space. That is, there is a concept of the same time as the real space in the virtual space, and a position and a state of an object in the virtual space change over time. Further, the brightness of each part in the space changes depending on conditions of a time slot such as day and night, weather, and a location such as indoors and outdoors.

A setting menu of an image setting condition (corresponding to first image setting condition) is displayed on the display screen, as shown in FIG. 1.

The setting menu for the image setting condition may not be displayed on the display screen.

The term "image setting condition" is a condition for acquiring the image in the virtual space, and includes, for example, an angle of view, blurriness, brightness, and a tint. Each of these items is for directly editing the image in the virtual space, and is different from an acquisition condition described below.

The image setting condition also includes a size of the image to be acquired with respect to the entire display screen.

The user who is accustomed to the setting of the image setting condition may adjust the image to a desired image by using the setting menu for the image setting condition. On the other hand, the user who is not accustomed to the setting of the image setting condition may not use the setting menu for the image setting condition, or may press an imaging button (not shown) displayed on the display screen at a stage where the image is roughly adjusted by using the setting menu for the image setting condition. In a case where the imaging button (not shown) is pressed, an image (corresponding to first image) displayed on the live-view screen is obtained. That is, the first image is obtained by the imaging performed in the virtual space, and specifically, can be acquired by imaging, using a virtual camera, a space located within an angle of view of the virtual camera in the virtual space. The virtual camera has the same performance and structure as a camera in the real space, that is, a real camera, and the user can operate the virtual camera in the same manner as the real space in the virtual space to perform the imaging.

A third display screen from the left shown in FIG. 1 is a screen after the imaging, and shows the captured first image. In this display screen, a setting menu for the acquisition condition is displayed, instead of the setting menu for the image setting condition.

The term "acquisition condition" is an acquisition condition of an image in the real space in a case where a captured image in the virtual space is assumed to be obtained by acquisition (capturing) in the real space. More specifically, the acquisition condition includes an imaging condition of the real camera, and includes, for example, a focal length, a focus position, a stop (f-number), a depth of field, a white balance, a shutter speed, a brightness/contrast, and an ISO sensitivity.

The case where the captured image in the virtual space is assumed to be obtained by acquisition (capturing) in the real space means that, for example, in a case where a subject that is the same as a subject in the virtual space is assumed to be present in the real space and an environment around the subject in the virtual reality is also reproduced in the real space, the image in the real space is acquired (captured) under the same angle of view and the same imaging condition as the captured image in the virtual reality.

The term "subject" is interpreted in a broad sense, is not limited to a specific tangible object, and includes a person, an object, a background, and the like. The term "environment around subject" means a date and time (day and night, and period), a location (indoors and outdoors), weather (direction of sun and the like), and the like.

A set value of the setting menu in the acquisition condition corresponds to a set value of the setting menu in the image setting condition, which is displayed on the immediately preceding display screen, and is estimated based on estimation processing described below.

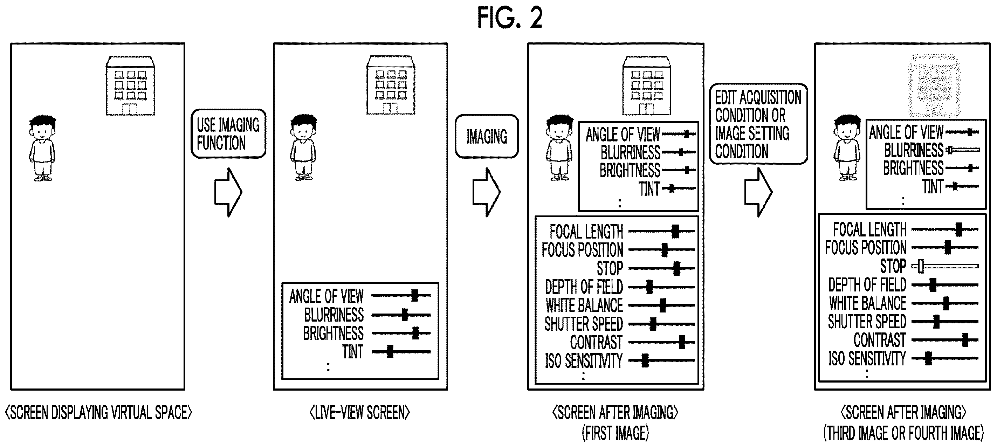

The setting menus for the image setting condition and the acquisition condition illustrated in FIG. 1 are display examples shown for convenience of description, and the present invention is not limited thereto. Further, the same applies to the setting menus for the image setting condition and the acquisition condition illustrated in FIGS. 2 to 5.

The user who is accustomed to the operation of the real camera edits the acquisition condition from the setting menu to adjust the first image to the desired image. In FIG. 1, a fourth display screen from the left shows a state in which the item of "stop" in the setting menu for the acquisition condition is changed from the third display screen from the left. Accordingly, the first image displayed on the third display screen from the left is converted into an image having a different blurriness from the first image, which is displayed on the fourth display screen from the left. The image after conversion corresponds to a third image. The image conversion is executed based on image conversion processing described below.

The editing of the acquisition condition is not limited to be performed immediately after the imaging, and can be performed even after some time has passed after the imaging. That is, the acquired image and the acquisition condition are saved in association with each other, and the editing thereof can be performed at a desired timing of the user.

Further, it is also possible to return to the same virtual space situation as a previous time, and acquire another image.

More specifically, since the information, such as the date and time, the location, and the subject position in the virtual space, is saved in association with the acquired image, the same virtual space situation as the previous time is reproduced using these pieces of information. In the reproduced virtual space, the user can acquire another image by changing, for example, the angle of view. That is, even in a case where the image acquisition application is once ended and then the image acquisition application is activated again after a lapse of time, it is possible to acquire again the image from the same virtual space situation as the previous time.

### (Second example)

FIG. 2 shows a transition of the display screen displayed on the user terminal, as in FIG. 1.

First and second display screens from the left shown in FIG. 2 are the same as the first and second display screens from the left shown in FIG. 1, and thus the description thereof will be omitted. On the other hand, third and fourth display screens from the left shown in FIG. 2 are different from the third and fourth display screens from the left shown in FIG. 1.

Specifically, the third display screen from the left in FIG. 2 is a screen after the imaging, and is different from the third display screen from the left shown in FIG. 1 in that both the setting menu for the image setting condition and the setting menu for the acquisition condition are displayed in the display screen. Therefore, the user can adjust the first image to the desired image by using one or both of the image setting condition and the acquisition condition. In other words, the user can adjust the first image to the desired image by using one condition, from the image setting condition and the acquisition condition, that is easier for the user to operate.

The set value of the setting menu in the acquisition condition corresponds to the set value of the setting menu in the image setting condition displayed on the immediately preceding display screen. Further, in a case where one setting value of the image setting condition and the acquisition condition is changed, the other setting value thereof is also changed in conjunction with the change.

In the example shown in FIG. 2, with the change of the item of "stop" in the setting menu for the acquisition condition, the first image displayed on the third display screen from the left is converted into an image having a different blurriness from the first image, which is displayed on the fourth display screen from the left. The image after conversion in this case corresponds to a third image.

Alternatively, the item of "blurriness" in the setting menu for the image setting condition may be changed without changing the item of "stop" in the setting menu for the acquisition condition. In this case, with the change of the item of "blurriness" in the setting menu for the image setting condition, the first image displayed on the third display screen from the left is converted into an image having a different blurriness from the first image, which is displayed on the fourth display screen from the left. The image after conversion in this case corresponds to a fourth image.

In the example shown in FIG. 2, the third image is the same as the fourth image, and the third image and the fourth image are distinguished from each other by a difference in whether the acquisition condition or the image setting condition is set in the process of converting the image.

### (Third example)

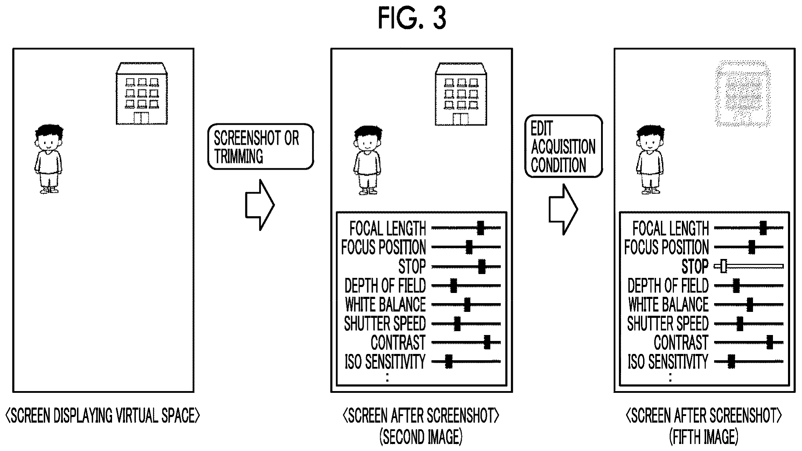

A third example shown in FIG. 3 is different from the example shown in FIG. 1 in that an image (corresponding to second image) is acquired by a screenshot or capturing and trimming of a part of the display screen, without using the imaging function (virtual camera) provided in the image acquisition application. The second image can also be said to be obtained by a record of the display screen of the virtual space.

Specifically, first, the user operates the user's own avatar in the virtual space to select the location where the imaging is performed in the virtual space, as in the example shown in FIG. 1. The first display screen from the left shown in FIG. 3 shows the imaging location selected by the user to acquire the image. The user determines the imaging location, and then performs the screenshot or the trimming of a part of the display screen (hereinafter, also referred to as screenshot or the like) to acquire the second image. The second display screen from the left shown in FIG. 3 is a screen after the screenshot or the like is performed, and is a screen on which the acquired second image is displayed. The setting menu for the acquisition condition is displayed on the display screen.

Thereafter, the user edits the acquisition condition from the setting menu for the acquisition condition to adjust the second image to the desired image. In FIG. 3, a third display screen from the left shows a state in which the item of "stop" in the setting menu for the acquisition condition is changed from the second display screen from the left. Accordingly, the second image displayed on the third display screen from the left is converted into an image (corresponding to fifth image) having a different blurriness from the second image, which is displayed on the third display screen from the left.

### (Fourth example)

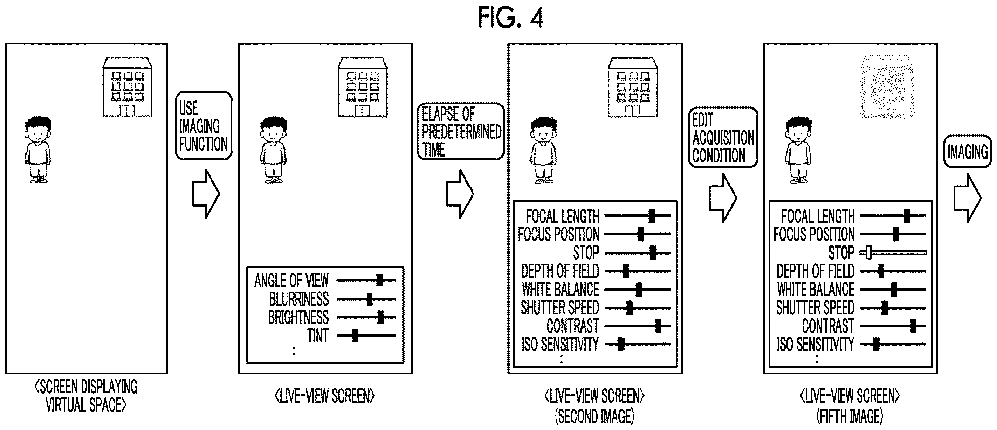

A fourth example shown in FIG. 4 is different from the example shown in FIG. 1 in that the setting menu for the acquisition condition is displayed on the live-view screen.

Specifically, first, the user operates the user's own avatar in the virtual space to select the location where the imaging is performed in the virtual space, as in the example shown in FIG. 1. A first display screen from the left shown in FIG. 4 shows the imaging location selected by the user to acquire the image. The user determines the imaging location, and then starts imaging preparation by using an imaging function (virtual camera) provided in the image acquisition application. A second display screen from the left shown in FIG. 1 shows a live-view screen after the virtual camera is activated. The setting menu for the image setting condition (corresponding to second image setting condition) is displayed on the display screen, as in the example shown in FIG. 1.

In a case where a predetermined time (for example, 1 to 3 seconds) elapses while a display of a second live-view screen from the left in FIG. 4 is maintained, the second display screen from the left automatically transitions to a third display screen from the left. More specifically, the setting menu for the acquisition condition is displayed, instead of the setting menu for the image setting condition. Accordingly, the user can change the acquisition condition on the live-view screen before the imaging to adjust the second image to the desired image.

In FIG. 4, the second display screen from the left automatically transitions to the third display screen from the left, but the present invention is not limited thereto. The user may perform a predetermined operation to transition the second display screen from the left to the third display screen from the left.

In FIG. 4, a fourth display screen from the left shows a state in which the item of "stop" in the acquisition condition is changed from the third display screen from the left. Accordingly, the second image displayed on the display screen third from the left is converted into an image (corresponding to fifth image) having a different blurriness from the second image, which is displayed on the display screen fourth from the left.

Thereafter, the user can press the imaging button (not shown) to acquire the fifth image.

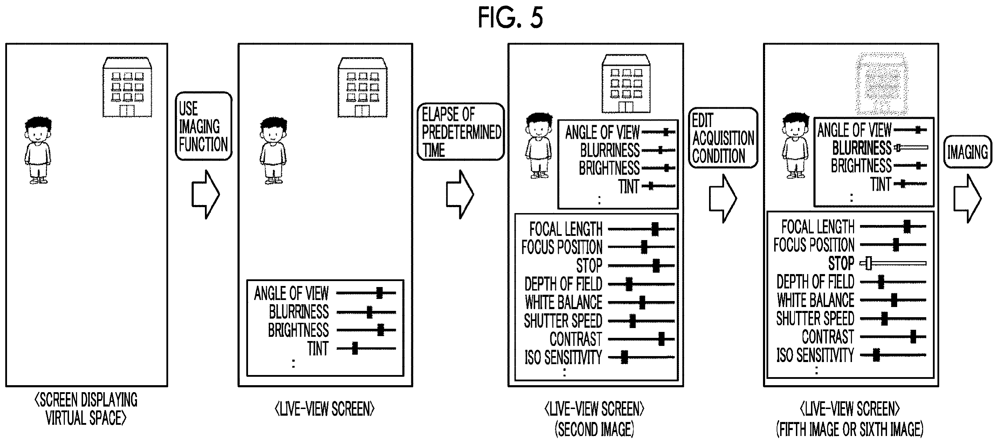

In the example shown in FIG. 4, the setting menu for the acquisition condition is displayed as shown in the third display screen from the left. However, both the setting menu for the image setting condition and the setting menu for the acquisition condition may be displayed on the third display screen from the left, as in an example shown in FIG. 5. In this case, the user can set one or both of the image setting condition and the acquisition condition to adjust the second image to the desired image.

More specifically, in FIG. 5, with the change of the item of "stop" in the setting menu for the acquisition condition, the second image displayed on the third display screen from the left is converted into an image having a different blurriness from the second image, which is displayed on the fourth display screen from the left. The image after conversion in this case corresponds to a fifth image.

Alternatively, the item of "blurriness" in the setting menu for the image setting condition may be changed without changing the item of "stop" in the setting menu for the acquisition condition. In this case, with the change of the item of "blurriness" in the setting menu for the image setting condition, the second image displayed on the third display screen from the left is converted into an image having a different blurriness from the second image, which is displayed on the fourth display screen from the left. The image after conversion in this case corresponds to a sixth image.

In the example shown in FIG. 5, the fifth image is the same as the sixth image, and the fifth image and the sixth image are distinguished from each other by a difference in whether the acquisition condition or the image setting condition is set in the process of converting the image.

### <<Configuration example of information processing system according to one embodiment of present invention>>

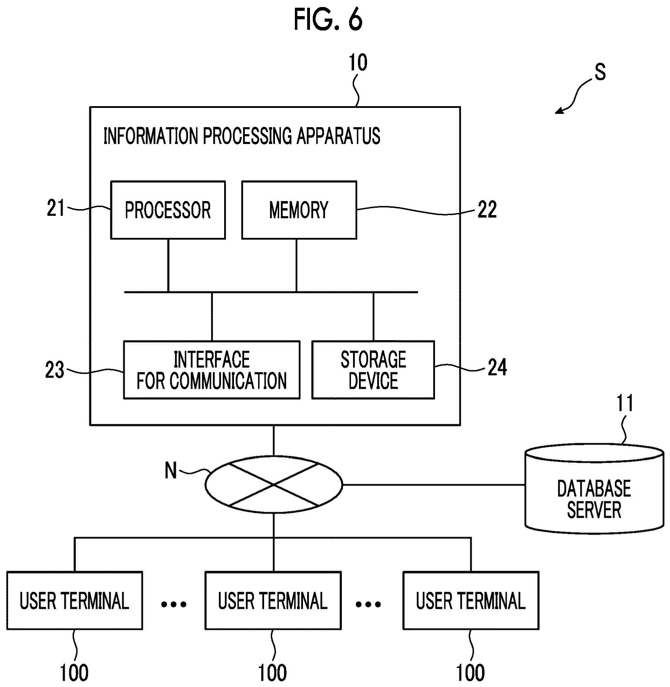

A configuration of an information processing system (hereinafter, referred to as "information processing system S") including the information processing apparatus according to one embodiment of the present invention will be described with reference to FIG. 6.

As shown in FIG. 6, the information processing system S is configured of an information processing apparatus 10, a plurality of user terminals 100, and a database server 11.

The database server 11 may be configured as a part of the information processing apparatus 10.

The information processing apparatus 10 is composed of a computer, and is configured of, for example, a personal computer (PC), a workstation, or a server computer. The information processing apparatus 10 may be configured of one computer, or may be configured of a plurality of computers distributed in parallel. Further, in a case where the computer constituting the information processing apparatus 10 is a server computer, a server computer for an application service provider (ASP), a software as a service (SaaS), a platform as a service (PaaS), or an infrastructure as a service (IaaS) may be used. In this case, in a case where necessary information is input to the user terminal 100, the above server computer performs various kinds of processing (calculation) based on the input information, and a calculation result is output on the user terminal 100 side. That is, it is possible to use a function of the server computer, which is the information processing apparatus 10, on the user terminal 100 side.

As shown in FIG. 6, the computer constituting the information processing apparatus 10 includes a processor 21, a memory 22, an interface for communication 23, and a storage device 24.

The processor 21 is configured of, for example, a central processing unit (CPU), a micro-processing unit (MPU), a micro controller unit (MCU), a graphics processing unit (GPU), a digital signal processor (DSP), a tensor processing unit (TPU), or an application specific integrated circuit (ASIC).

The memory 22 is configured of, for example, a semiconductor memory such as a read only memory (ROM) and a random access memory (RAM). A program for executing the main image acquisition (hereinafter, image acquisition program) is stored in the memory 22. The image acquisition program is a program for causing the processor 21 to perform each piece of processing of the information processing method described below. The image acquisition program may be acquired by being read from a computer-readable recording medium, or by being downloaded through a communication network such as the Internet or an intranet.

The interface for communication 23 may be configured of, for example, a network interface card or a communication interface board. The computer constituting the information processing apparatus 10 can communicate with another device connected to the Internet, a mobile communication line, or the like via the interface for communication 23.

The storage device 24 is configured of, for example, a flash memory, a hard disc drive (HDD), a solid state drive (SSD), a flexible disc (FD), a magneto-optical disc (MO disc), a compact disc (CD), a digital versatile disc (DVD), a secure digital card (SD card), or a universal serial bus memory (USB memory). The storage device 24 may be built into a computer body constituting the information processing apparatus 10, or may be attached to the computer body in an external form.

The user terminal 100 is a computer used by the user, and is, specifically, configured of a smart device such as a smartphone, a tablet terminal, a laptop personal computer (PC), or the like. The user terminal 100 comprises a processor, a memory, and an interface for communication. The image acquisition application for using the information processing system S is stored in the user terminal 100. In using the information processing system S, the user downloads the image acquisition application from a predetermined site to install the image acquisition application on the user terminal 100.

The database server 11 is, for example, a cloud-based server prepared by a service operating company using the information processing apparatus 10, specifically, a company that provides the main image acquisition service, or the like. The information processing apparatus 10 is communicably connected to the database server 11 through a network N, and can freely read out various types of data.

In the database server 11, the acquired image is saved in association with the acquisition condition of the image in the real space. More specifically, each of the first image, the second image, the third image, the fourth image, the fifth image, and the sixth image is saved in association with the acquisition condition of each image.

The acquired image and the acquisition condition may be saved as the same data file in the database server 11, or may be saved as separate data files. In a case of being saved as the same data file, the acquisition condition may be saved as the accessory information of the image. In a case of being saved as the separate data files, path information to the other data file may be saved in one data file. Further, the database server 11 may have a management database that manages the association between the acquired image and the acquisition condition. For example, the management database may indicate association between an identification ID of the data file of the image and an identification ID of the data file of the acquisition condition.

The database server 11 may save at least one of information on the virtual space, the image setting condition, or a method used in each of the estimation processing and the image conversion processing described below, in addition to the acquired image and the acquisition condition. At least one of these pieces of information may be saved in association with the acquired image and the acquisition condition.

The term "information on virtual space" is information on a time slot, weather, season, location, subject position, and the like in the virtual space, at a point in time at which the image is acquired. With the use of these pieces of information, the virtual space at the point in time at which the image is acquired is reproduced.

Further, the acquired image, the acquisition condition, and the like may be saved in the user terminal 100 of each user, without being saved in the database server 11.

### <<Function of information processing apparatus according to one embodiment of present invention>>

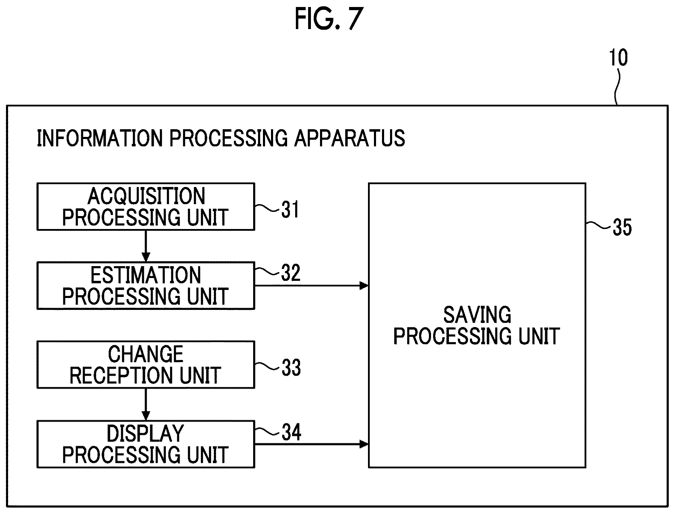

Next, a configuration of the information processing apparatus 10 according to one embodiment of the present invention will be described again from a functional aspect. As shown in FIG. 7, the information processing apparatus 10 includes an acquisition processing unit 31, an estimation processing unit 32, a change reception unit 33, a display processing unit 34, and a saving processing unit 35.

These functional units are realized by a cooperation between a hardware device included in the computer constituting the information processing apparatus 10 and a program (that is, software) installed in the computer.

Hereinafter, each functional unit will be described.

### (Acquisition processing unit)

The acquisition processing unit 31 executes acquisition processing of acquiring an image based on at least a part of display data constituting the display of the virtual space.

The term "display data" means an image (image data) displayed on the entire screen of the user terminal 100. The term "image based on at least part of display data" may be an image displayed on the entire screen of the user terminal 100, or may be an image acquired by capturing and trimming a part of the display screen of the user terminal 100 as in the example shown in FIG. 3. The image acquired by the acquisition processing is, for example, the first image or the second image described above.

The acquisition processing unit 31 acquires the first image setting condition for acquiring the first image. Further, the acquisition processing unit 31 acquires the second image setting condition for acquiring the second image.

In the following description, for convenience, the first image or the second image is also simply referred to as "image", and the first image setting condition and the second image setting condition are also simply referred to as "image setting condition".

In the examples shown in FIGS. 1 and 2, the first image and the first image setting condition are acquired by the press of the imaging button (not shown).

In the example shown in FIG. 3, the second image and the second image setting condition are acquired by the screenshot or the like. Further, in the examples shown in FIGS. 4 and 5, the second image and the second image setting condition are acquired at the timing at which the predetermined time elapses without changing the display of the display screen in the live-view screen, or are acquired by the reception of the predetermined operation by the user.

### (Estimation processing unit)

The estimation processing unit 32 executes the estimation processing of estimating the acquisition condition.

More specifically, the estimation processing unit 32 estimates the acquisition condition of the first image in the real space, based on at least one of the first image or the first image setting condition. Further, the estimation processing unit 32 estimates the acquisition condition of the second image in the real space, based on at least one of the second image or the second image setting condition.

As described above, the term "acquisition condition" includes the imaging condition of the real camera, and more specifically, includes the focal length, the focus position, the stop, the depth of field, the white balance, the shutter speed, the brightness/contrast, the ISO sensitivity, and the like.

The term "estimation" is interpreted in a broad sense, and does not limit a method used to acquire the acquisition condition. That is, the term "method of estimating acquisition condition" includes any method of acquiring the acquisition condition, such as a case where the acquisition condition is "estimated" using a trained model generated in advance by machine learning, a case where the acquisition condition is "calculated" using a simulation by an optical calculation model, a case where an image is "analyzed" by an image analysis technique, or a case where an output value corresponding to an input value is "determined" using a look-up table or the like.

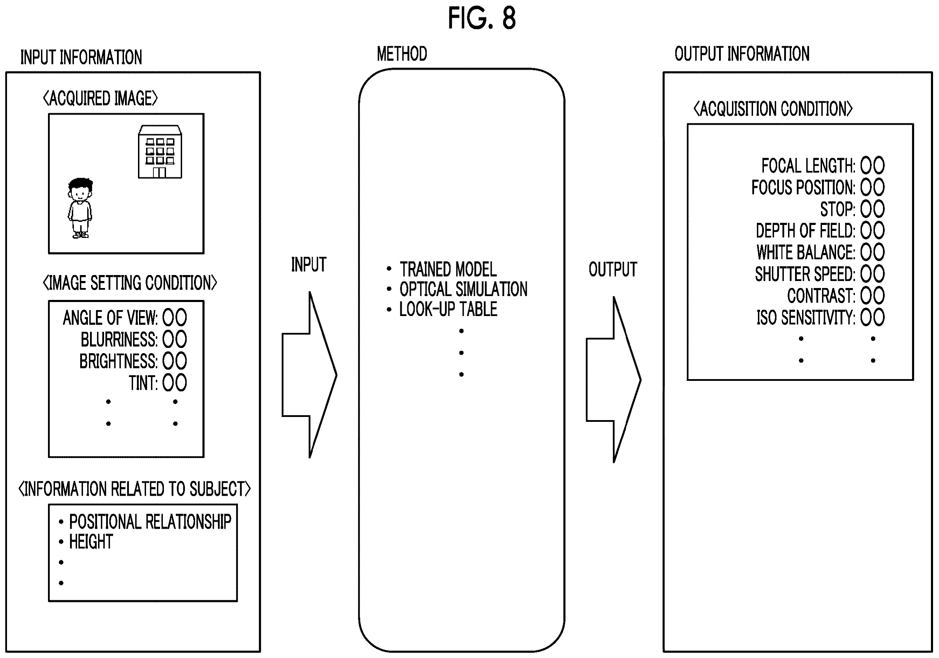

As shown in FIG. 8, examples of a method of estimating the acquisition condition include the following three examples.
(1) Trained model
(2) Optical simulation using optical calculation model
(3) Look-up table

FIG. 8 is a diagram showing input information, a method to be used, and output information.

Not all of the input information shown in FIG. 8 is used, and the input information is selected according to the method to be used, required accuracy of the output information, and the like.

Hereinafter, a case where the estimation processing is executed using the three examples described above will be specifically described.

### [Case of using trained model]

The estimation processing unit 32 may estimate the acquisition condition of the image in the real space, using the trained model generated by machine learning in advance.

The term "machine learning" described herein is to analyze a relationship between the input information (at least one of acquired image or image setting condition) and the output information (acquisition condition), which are prepared in advance as learning data, and to construct a mathematical model (function) defining the relationship.

The input information according to each of the examples of FIGS. 1 to 5 is input to the trained model generated by such machine learning to obtain the acquisition condition as the output information.

An image actually captured in the real space and an imaging condition in a case where the image is captured may be used as the input information and the output information, which are prepared in advance.

Further, the acquisition condition estimated by the trained model may not be a strict condition for obtaining the image in the real space, and may be a rough acquisition condition in a case where the image is assumed to be acquired in the real space.

More specifically, in the examples shown in FIGS. 1 and 2, the estimation processing unit 32 estimates the acquisition condition of the first image in the real space using the trained model, based on at least one of the first image or the first image setting condition. That is, the estimation processing unit 32 inputs at least one of the first image or the first image setting condition to the trained model to obtain the acquisition condition as the output information.

Further, in the example shown in FIG. 3, since the imaging function is not used and the second image setting condition is not present, the estimation processing unit 32 estimates the acquisition condition of the second image in the real space using the trained model, based on the second image. That is, the estimation processing unit 32 inputs the second image to the trained model to obtain the acquisition condition as the output information.

Further, in the examples shown in FIGS. 4 and 5, the estimation processing unit 32 estimates the acquisition condition of the second image in the real space using the trained model, based on at least one of the second image or the second image setting condition. That is, the estimation processing unit 32 inputs at least one of the second image or the second image setting condition to the trained model to obtain the acquisition condition as the output information.

### [Case of using optical simulation]

The estimation processing unit 32 may estimate the acquisition condition of the image in the real space, using an optical simulation by the optical calculation model.

In the optical simulation, based on an optical behavior, an optical path, and the like in each portion of the real space and the virtual space, brightness and optical characteristics in each portion are calculated to derive, from one of the image setting condition in the virtual space and the acquisition condition of the image in the real space, the other.

More specifically, in the examples shown in FIGS. 1 and 2, the estimation processing unit 32 performs the optical simulation, using the first image setting condition and the information related to the subject displayed in the first image, to calculate the acquisition condition of the first image in the real space.

Further, in the examples shown in FIGS. 4 and 5, the estimation processing unit 32 performs the optical simulation, using the second image setting condition and information related to the subject displayed in the second image, to calculate the acquisition condition of the second image in the real space.

The term "information related to subject" includes a position of the subject displayed in the first image (second image), a size of the subject, a distance from a position of an imaging person to the subject, a distance between the subjects, and the like. The information related to the subject may be acquired from the information on the virtual space saved in the database server 11, or may be acquired by image analysis on the first image (second image) using a known image analysis technique.

### [Case of using look-up table]

The estimation processing unit 32 may estimate the acquisition condition of the image in the real space, using a look-up table (hereinafter, also referred to as LUT) in which a correspondence relationship between the image setting condition and the acquisition condition is set in advance.

More specifically, in the examples shown in FIGS. 1 and 2, the estimation processing unit 32 determines the acquisition condition of the first image in the real space, using the LUT in which the correspondence relationship between the first image setting condition and the acquisition condition is set in advance. For example, in a case where the set value of "blurriness" of the first image setting condition is 3, the set value of "stop" of the acquisition condition may be set to 4 with reference to the LUT.

Further, in the examples shown in FIGS. 4 and 5, the estimation processing unit 32 determines the acquisition condition of the second image in the real space, using the LUT in which the correspondence relationship between the second image setting condition and the acquisition condition is set in advance.

Further, the estimation processing unit 32 may set in advance a numerical value range of the acquisition condition corresponding to the image setting condition in the LUT, execute the image analysis on the acquired image by a known image analysis technique, reflect a result thereof in the LUT, and determine (estimate) the acquisition condition from the numerical value range.

Specifically, for example, in the LUT, the numerical value range of "stop" of the acquisition condition, which corresponds to the set value of "blurriness" of the image setting condition of 3, is set to 4.5 to 8.0 in advance. In a case where the image analysis is executed on the acquired image by a known image analysis technique and "stop" of the acquisition condition is estimated as 4.0, a lower limit of 4.5 in the numerical value range of "stop" of 4.5 to 8.0 in the LUT may be set as the set value.

As described above, the estimation processing unit 32 may estimate the acquisition condition of the image in the real space based on both the acquired image and the image setting condition, using the LUT and the image analysis technique.

### (Change reception unit)

After the acquisition condition of the image is estimated in the real space, the change reception unit 33 executes change reception processing of receiving a change to the estimated acquisition condition of the image.

That is, in a case where the user edits or changes the acquisition condition, the change reception unit 33 receives the change to the acquisition condition, as shown in FIGS. 1 to 5.

More specifically, in the examples shown in FIGS. 1 and 2, after the acquisition condition of the first image is estimated in the real space, the change reception unit 33 executes processing of receiving a change to the estimated acquisition condition of the first image (corresponding to first change reception processing).

Further, in the examples shown in FIGS. 3 to 5, after the acquisition condition of the second image is estimated in the real space, the change reception unit 33 executes processing of receiving a change to the estimated acquisition condition of the second image (corresponding to third change reception processing).

Further, after the acquisition condition of the image is estimated in the real space, the change reception unit 33 may receive the change to the image setting condition. That is, in a case where the user edits or changes the image setting condition, the change reception unit 33 receives the change to the image setting condition, as shown in FIGS. 2 and 5.

More specifically, in the example shown in FIG. 2, after the acquisition condition of the first image is estimated in the real space, the change reception unit 33 executes processing of receiving a change to the first image setting condition (corresponding to second change reception processing).

Further, in the example shown in FIG. 5, after the acquisition condition of the second image is estimated in the real space, the change reception unit 33 executes processing of receiving a change to the second image setting condition (corresponding to fourth change reception processing).

### (Display processing unit)

After the change reception processing, the display processing unit 34 executes display processing of displaying, on the display screen, an image obtained by converting the image based on the acquisition condition after change.

More specifically, in the examples shown in FIGS. 1 and 2, after the first change reception processing, the display processing unit 34 executes processing of displaying, on the display screen, the third image obtained by converting the first image based on the acquisition condition after change (corresponding to first display processing).

Further, in the examples shown in FIGS. 3 to 5, after the third change reception processing, the display processing unit 34 executes processing of displaying, on the display screen, the fifth image obtained by converting the second image based on the acquisition condition after change (corresponding to third display processing).

Further, after the change reception processing, the display processing unit 34 executes the display processing of displaying, on the display screen, an image obtained by converting the image based on the changed image setting condition.

More specifically, in the example shown in FIG. 2, after the second change reception processing, the display processing unit 34 executes processing of displaying, on the display screen, the fourth image obtained by converting the first image based on the first image setting condition (corresponding to second display processing) after change. Further, in the example shown in FIG. 5, after the fourth change reception processing, the display processing unit 34 executes processing of displaying, on the display screen, the sixth image obtained by converting the second image based on the second image setting condition (corresponding to fourth display processing) after change.

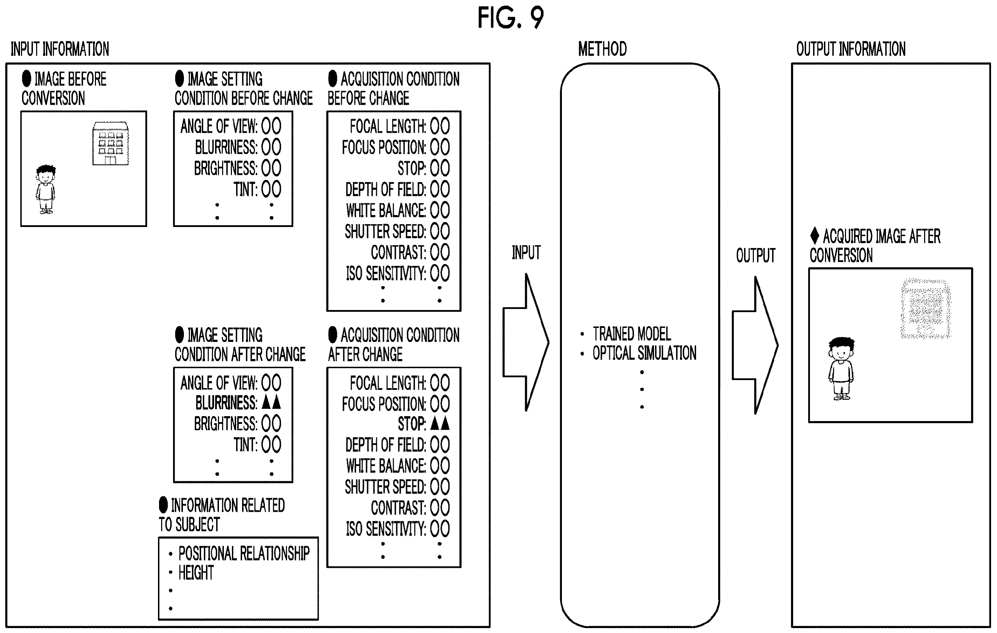

As shown in FIG. 9, examples of a method used for the processing of converting the image (also referred to as image conversion processing) include the following two examples.
(1) Trained model
(2) Optical simulation using optical calculation model

FIG. 9 is a diagram showing input information, a method to be used, and output information.

Not all of the input information shown in FIG. 9 is used, and the input information is selected according to the method to be used, required accuracy of the output information, and the like.

Hereinafter, a case where the image conversion processing is executed using the two examples described above will be specifically described.

### [Case of using trained model]

The display processing unit 34 executes the image conversion processing, using a trained model generated by machine learning in advance.

More specifically, as shown in FIG. 9, the display processing unit 34 estimates an image after conversion using the trained model, based on an image before conversion, an image setting condition before change, and an image setting condition after change. Alternatively, the display processing unit 34 may estimate an image after conversion using the trained model, based on an image before conversion, an acquisition condition before change, and an acquisition condition after change.

That is, as in the example shown in FIG. 3, in a case where the image setting condition is not used, the display processing unit 34 uses the acquisition conditions before and after the change as the input information. However, for other examples (examples shown in FIGS. 1, 2, 4, and 5), at least one of the acquisition conditions before and after the change or the image setting conditions before and after the change may be used as the input information.

The term "machine learning" described herein is to analyze a relationship between the input information (image before conversion and image setting conditions or acquisition conditions before and after change) and the output information (image after conversion), which are prepared in advance as learning data, and to construct a mathematical model (function) defining the relationship.

The input information according to each of the examples of FIGS. 1 to 5 is input to the trained model generated by such machine learning to obtain the image after conversion as the output information.

### [Case of using optical simulation]

The display processing unit 34 executes processing of generating the image after conversion, using the optical simulation by the optical calculation model.

More specifically, the display processing unit 34 may generate the image by the optical simulation, using the information related to the subject described above and at least one of the acquisition condition after change or the image setting condition after change.

### (Saving processing unit)

The saving processing unit 35 executes saving processing of saving the acquired image in association with the acquisition condition of the image in the real space. More specifically, the saving processing unit 35 saves each of the first image, the second image, the third image, the fourth image, the fifth image, and the sixth image in association with the acquisition condition of each image.

The saving processing unit 35 may save the associated image and acquisition condition in, for example, at least one of the database server 11 or the user terminal 100.

Further, the saving processing unit 35 may save at least one of the information on the virtual space, the image setting condition, or the method used in each of the estimation processing and the image conversion processing in association with the image and the acquisition condition.

### <<Main image acquisition flow according to one embodiment of present invention>>

Next, an image acquisition flow using the information processing apparatus 10 will be described. The main image acquisition flow employs the information processing method according to the embodiment of the present invention.

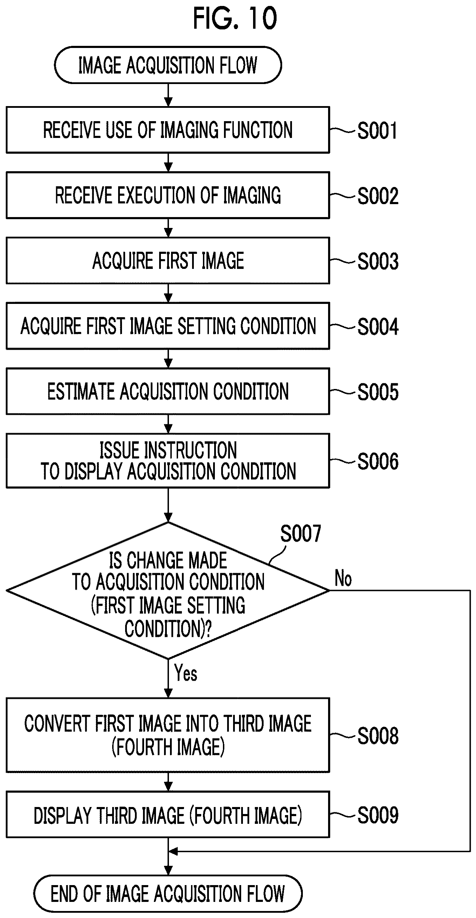

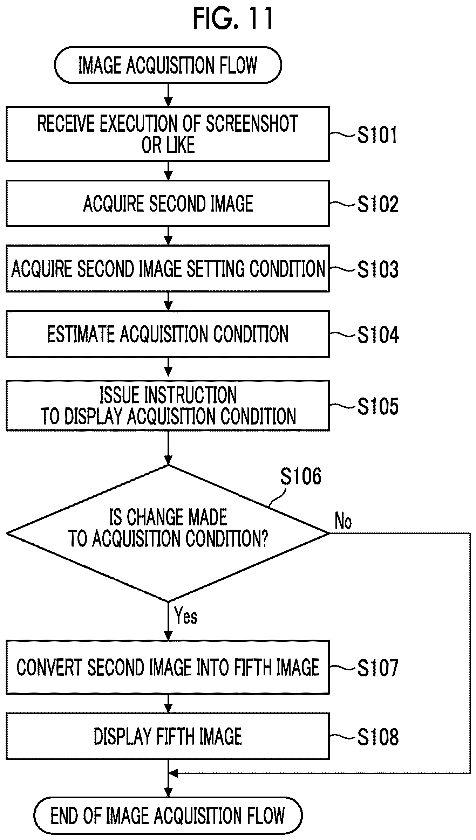

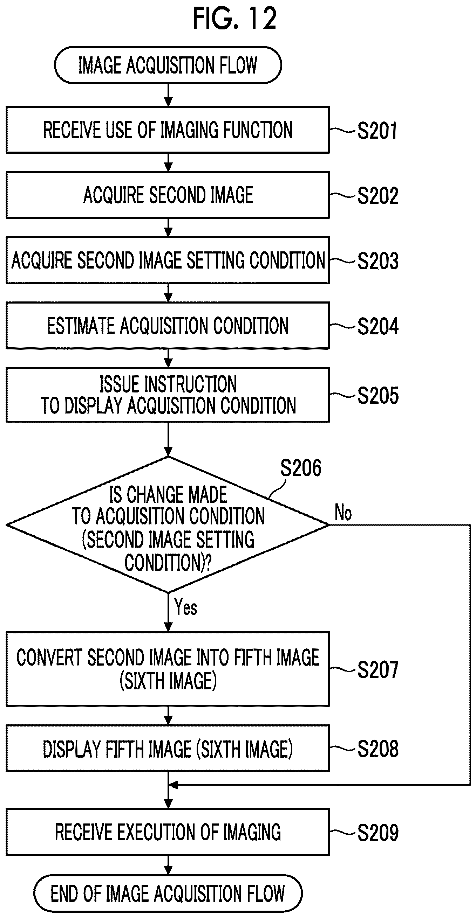

In FIGS. 10 to 12, different image acquisition flows are each described. The image acquisition flow illustrated in FIG. 10 corresponds to the examples shown in FIGS. 1 and 2, the image acquisition flow illustrated in FIG. 11 corresponds to the example shown in FIG. 3, and the image acquisition flow illustrated in FIG. 12 corresponds to the examples shown in FIGS. 4 and 5. Each step in the image acquisition flows illustrated in FIGS. 10 to 12 corresponds to each element constituting the information processing method according to the embodiment of the present invention.

First, the image acquisition flow illustrated in FIG. 10 will be described.

The main image acquisition flow is started with the activation of the image acquisition application installed on the user terminal 100 as a trigger.

First, the user selects a menu related to the imaging function from the display screen of the user terminal 100, and thus the processor 21 receives the use of the imaging function (virtual camera) provided in the image acquisition application (S001). Accordingly, the display screen of the user terminal 100 is switched to the live-view screen, and the setting menu for the first image setting condition is displayed on the display screen.

Next, the user presses the imaging button (not shown) displayed on the display screen, and thus the processor 21 receives the execution of the imaging (S002). In a case where the execution of the imaging is received, the processor 21 acquires the first image obtained by the imaging in the virtual space (S003). Further, the processor 21 acquires the first image setting condition for acquiring the first image (S004).

Next, the processor 21 estimates the acquisition condition of the first image in the real space in a case where the first image is assumed to be obtained by the acquisition in the real space (S005). Specifically, the processor 21 estimates the acquisition condition of the first image in the real space, based on at least one of the acquired first image or the first image setting condition. More specifically, the processor 21 estimates the acquisition condition of the first image in the real space, using the above method such as the trained model and the optical simulation.

Next, the processor 21 issues an instruction to cause the display screen to display the acquisition condition (S006). Accordingly, the setting menu for the acquisition condition is displayed on the display screen of the user terminal 100, as shown in FIGS. 1 and 2.

The processor 21 may display the setting menu for the acquisition condition on the display screen, instead of the setting menu for the first image setting condition, as in the example shown in FIG. 1, or may display both the setting menu for the first image setting condition and the setting menu for the acquisition condition on the display screen, as in the example shown in FIG. 2.

Thereafter, the processor 21 determines whether or not the change is made to the acquisition condition (or first image setting condition) (S007). Specifically, in a case where the user edits the acquisition condition (or first image setting condition) from the setting menu, the processor 21 determines that the change to the acquisition condition (or first image setting condition) has been made, and receives the change. The processor 21 receives the change, and then converts the first image into the third image (or fourth image) based on the acquisition condition (or first image setting condition) after change (S008). More specifically, the processor 21 converts the first image into the third image (or fourth image), using the above method such as the trained model and the optical simulation. Thereafter, the processor 21 displays, on the display screen, the third image (or fourth image) obtained by converting the first image (S009).

In step S007, in a case where the processor 21 determines that the change to the acquisition condition (or first image setting condition) has not been made, steps S008 and S009 are skipped.

The main image acquisition flow ends at a point in time at which the series of pieces of processing described above ends. Further, the main image acquisition flow is repeatedly performed each time the main image acquisition is performed.

Next, the image acquisition flow illustrated in FIG. 11 will be described.

The main image acquisition flow is started with the activation of the image acquisition application installed on the user terminal 100 as a trigger.

First, the user determines the imaging location in the virtual space and then performs the operation of the screenshot or the like of the display screen, and thus the processor 21 receives the execution of the screenshot or the like (S101). Accordingly, the processor 21 acquires the second image obtained by the record of the display screen of the virtual space (S102). Further, the processor 21 acquires the second image setting condition for acquiring the second image (S103). Next, the processor 21 estimates the acquisition condition of the second image in the real space in a case where the second image is assumed to be obtained by the acquisition in the real space (S104). Since a specific estimation method is the same as the image acquisition flow illustrated in FIG. 10, a description thereof will be omitted.

Next, the processor 21 issues an instruction to cause the display screen to display the acquisition condition (S105). Accordingly, the setting menu for the acquisition condition is displayed on the display screen of the user terminal 100, as shown in FIG. 3.

Thereafter, the processor 21 determines whether or not the change to the acquisition condition is made (S106). In a case where the user edits the acquisition condition from the setting menu, the processor 21 determines that the change to the acquisition condition has been made, and receives the change. The processor 21 receives the change, and then converts the second image into the fifth image based on the acquisition condition after change (S107). Since a specific conversion method is the same as the image acquisition flow illustrated in FIG. 10, a description thereof will be omitted. Thereafter, the processor 21 displays, on the display screen, the fifth image obtained by converting the second image (S108).

In step S106, in a case where the processor 21 determines that the change to the acquisition condition has not been made, steps S107 and S108 are skipped.

The main image acquisition flow ends at a point in time at which the series of pieces of processing described above ends. Further, the main image acquisition flow is repeatedly performed each time the main image acquisition is performed.

Next, the image acquisition flow illustrated in FIG. 12 will be described.

The main image acquisition flow is started with the activation of the image acquisition application installed on the user terminal 100 as a trigger.

First, the user selects the menu related to the imaging function from the display screen of the user terminal 100, and thus the processor 21 receives the use of the imaging function (virtual camera) provided in the image acquisition application (S201). Accordingly, the display screen of the user terminal 100 is switched to the live-view screen, and the setting menu for the second image setting condition is displayed on the display screen.

Next, with the elapse of the predetermined time while the display of the live-view screen is maintained or the predetermined operation by the user, the processor 21 acquires the second image obtained by the record of the display screen of the virtual space (S202). Further, the processor 21 acquires the second image setting condition for acquiring the second image (S203).

Next, the processor 21 estimates the acquisition condition of the second image in the real space in a case where the second image is assumed to be obtained by the acquisition in the real space (S204). The processor 21 estimates an acquisition condition of the second image in the real space, based on at least one of the acquired second image or the second image setting condition. Since a specific estimation method is the same as the image acquisition flow illustrated in FIG. 10, a description thereof will be omitted.

Next, the processor 21 issues an instruction to cause the display screen to display the acquisition condition (S205). Accordingly, the setting menu for the acquisition condition is displayed on the display screen of the user terminal 100, as shown in FIGS. 4 and 5.

The processor 21 may display the setting menu for the acquisition condition on the display screen, instead of the setting menu for the second image setting condition, as in the example shown in FIG. 4, or may display both the setting menu for the second image setting condition and the setting menu for the acquisition condition on the display screen, as in the example shown in FIG. 5.

Thereafter, the processor 21 determines whether or not the change to the acquisition condition (or second image setting condition) is made (S206). In a case where the user edits the acquisition condition (or second image setting condition) from the setting menu, the processor 21 determines that the change to the acquisition condition (or second image setting condition) has been made, and receives the change. The processor 21 receives the change, and then converts the second image into the fifth image (or sixth image) based on the acquisition condition (or second image setting condition) after change (S207). Since a specific conversion method is the same as the image acquisition flow illustrated in FIG. 10, a description thereof will be omitted.

Next, the processor 21 displays, on the display screen, the fifth image (or sixth image) obtained by converting the second image (S208).

In a case where the processor 21 determines in step S206 that the change to the acquisition condition (or second image setting condition) has not been made, steps S207 and S208 are skipped.

Thereafter, the user presses the imaging button (not shown) displayed on the display screen, and thus the processor 21 receives the execution of the imaging (S209).

The main image acquisition flow ends at a point in time at which the series of pieces of processing described above ends. Further, the main image acquisition flow is repeatedly performed each time the main image acquisition is performed.

The image acquisition flows shown in FIGS. 10 to 12 are merely examples, and a new step may be added without departing from the spirit of the present invention.

For example, the image acquisition flows S201 to S208 illustrated in FIG. 12 may be executed before step S002 of the image acquisition flow shown in FIG. 10, or conversely, steps S002 to S009 of the image acquisition flow shown in FIG. 10 may be executed after step S208 of the image acquisition flow illustrated in FIG. 12.

Further, an image editing flow may be performed after the image acquisition flow shown in FIG. 10 ends.

Specifically, after step S009 shown in FIG. 10, the processor 21 saves the third image (fourth image) in association with the acquisition condition in the database server 11. Thereafter, the main image acquisition flow shown in FIG. 10 ends.

Next, in a case where the user activates the image acquisition application and performs the predetermined operation, the processor 21 displays the same screen as the display screen displayed in step S009. Specifically, the processor 21 acquires the third image (fourth image) and the acquisition condition from the database server 11. Accordingly, the third image (fourth image) and the setting menu for the acquisition condition are displayed on the display screen. Alternatively, the third image (fourth image) and the setting menus for both the acquisition condition and the image setting condition are displayed on the display screen.

Thereafter, in a case where the user edits the acquisition condition (or image setting condition) from the setting menu displayed on the display screen, the processor 21 determines that the change to the acquisition condition (or image setting condition) has been made, and receives the change. The processor 21 receives the change, and then converts the third image (fourth image) into another image based on the acquisition condition (or image setting condition) after change. The image editing flow ends at a point in time at which the series of pieces of processing described above ends.

Similarly, the above image editing flow may be performed even after the image acquisition flows shown in FIGS. 11 and 12 end.

Further, the processor 21 may save, in the database server 11, the information on the virtual space in a case where the image is acquired in the image acquisition flows shown in FIGS. 10 to 12 so far, and may execute step S001 and subsequent steps of the image acquisition flow shown in FIG. 10 from the same virtual space situation as the previous time.

Specifically, in a case where the user activates the image application and then performs the predetermined operation, the processor 21 acquires the information on the virtual space saved in the database server 11 at a time of previous image acquisition flow, for example. Accordingly, the same virtual space situation as the previous time, that is, the date and time, the location, the subject position, and the like in the virtual space are reproduced on the display screen. Thereafter, the user selects the location where the imaging is performed in the virtual space and selects the menu related to the imaging function from the display screen of the user terminal 100, and thus the processor 21 performs each step of step S001 and subsequent steps.

Similarly, in the image acquisition flow shown in FIG. 11, the information on the virtual space at the time of previous image acquisition saved in the database server 11 may be acquired before step S101. Further, in the image acquisition flow shown in FIG. 12, the information on the virtual space at the time of previous image acquisition saved in the database server 11 may be acquired before step S201.

### <<Efficacy of one embodiment of present invention>>

As described above, with the information processing apparatus 10, the acquisition condition of the image in the real space is estimated in a case where the image in the virtual space is assumed to be obtained by the acquisition in the real space.

More specifically, in a case where the image in the virtual space is acquired, there is an item (parameter) unique to the virtual space regarding the image setting condition in the virtual space, and the user who is not accustomed to the setting of such an item may be confused in adjusting the image. On the other hand, in a case where a condition for acquiring the same image in the real space is assumed to be known in a case where the image in the virtual space is acquired, the image can be adjusted based on the condition. In other words, the user can use and reflect knowledge and experience regarding the imaging condition in the real space for the acquisition of the image in the virtual space. Accordingly, it is possible to smoothly acquire the image according to a user's preference in the virtual space.

Further, the image is the first image obtained by the imaging in the virtual space, or the second image obtained by the record of the display screen of the virtual space.

Accordingly, as shown in FIGS. 1 and 2, in a case where the imaging is performed in the virtual space using the imaging function, it is possible to smoothly acquire the image according to the user's preference. Further, in a case where the display screen of the virtual space is recorded, more specifically, in a case where the screenshot or the like is performed as shown in FIG. 3 or in a case where the live-view screen of the virtual space is recorded as shown in FIGS. 4 and 5, it is possible to smoothly acquire the image according to the user's preference.

Further, in the estimation processing, the processor 21 estimates the acquisition condition of the image in the real space, using the trained model generated by machine learning in advance.

Accordingly, it is possible to estimate the rough acquisition condition in a case where the image is assumed to be acquired in the real space. Further, it is also possible to estimate a more accurate acquisition condition according to the accuracy of the trained model.

Further, in the acquisition processing, the processor 21 receives the first image setting condition for acquiring the first image. Further, in the estimation processing, the processor estimates the acquisition condition of the first image in the real space, based on at least one of the first image or the first image setting condition.

Accordingly, as shown in FIGS. 1 and 2, in a case where the imaging is performed in the virtual space using the imaging function, it is possible to smoothly acquire the image according to the user's preference.

Further, in the estimation processing, the processor 21 estimates the acquisition condition of the first image in the real space, using the trained model created by machine learning in advance, based on at least one of the first image or the first image setting condition.

Accordingly, in a case where the imaging is performed in the virtual space using the imaging function as shown in FIGS. 1 and 2, it is possible to estimate the rough acquisition condition in a case where the image is assumed to be acquired in the real space. Further, it is also possible to estimate a more accurate acquisition condition according to the accuracy of the trained model.

Further, in the estimation processing, the processor 21 estimates the acquisition condition of the first image in the real space, by the optical simulation using the first image setting condition and the information related to the subject displayed in the first image.

Accordingly, in a case where the imaging is performed in the virtual space using the imaging function as shown in FIGS. 1 and 2, it is possible to obtain a suitable solution for the acquisition condition of the first image by the optical simulation in a case where the image is assumed to be acquired in the real space.

Further, after the acquisition condition of the first image is estimated in the real space in the estimation processing, the processor 21 executes the first change reception processing of receiving the change to the estimated acquisition condition of the first image. Further, the processor executes the first change reception processing, and then executes the first display processing of displaying, on the display screen, the third image obtained by converting the first image based on the acquisition condition after change.

Accordingly, the user who is accustomed to the setting of the acquisition condition of the image (imaging condition) in the real space can change as appropriate the acquisition condition after the image acquisition to smoothly acquire the image according to the user's preference.

Further, after the acquisition condition of the first image is estimated in the real space in the estimation processing, the processor 21 executes the second change reception processing of receiving the change to the first image setting condition. Further, the processor executes the second change reception processing, and then executes the second display processing of displaying, on the display screen, the fourth image obtained by converting the first image based on the first image setting condition after change.

Accordingly, the user who is accustomed to the setting of the image setting condition in the virtual space can change as appropriate the image setting condition after the image acquisition to smoothly acquire the image according to the user's preference.

Further, in the acquisition processing, the processor 21 receives the second image setting condition for acquiring the second image. Further, in the estimation processing, the processor estimates the acquisition condition of the second image in the real space, based on at least one of the second image or the second image setting condition.

Accordingly, in a case where the display screen of the virtual space is recorded as shown in FIGS. 3 to 5, it is possible to smoothly acquire the image according to the user's preference.

Further, in the estimation processing, the processor 21 estimates the acquisition condition of the second image in the real space, using the trained model created by machine learning in advance, based on at least one of the second image or the second image setting condition.

Accordingly, in a case where the display screen of the virtual space is recorded as shown in FIGS. 3 to 5, it is possible to estimate the rough acquisition condition in a case where the image is assumed to be acquired in the real space. Further, it is also possible to estimate a more accurate acquisition condition according to the accuracy of the trained model.

Further, in the estimation processing, the processor 21 estimates the acquisition condition of the second image in the real space, by the optical simulation using the second image setting condition and the information related to the subject displayed in the second image.

Accordingly, in a case where the display screen of the virtual space is recorded as shown in FIGS. 3 to 5, it is possible to obtain a suitable solution for the acquisition condition of the second image by the optical simulation in a case where the image is assumed to be acquired in the real space.

Further, after the acquisition condition of the second image is estimated in the real space in the estimation processing, the processor 21 executes the third change reception processing of receiving the change to the estimated acquisition condition of the second image. Further, the processor executes the third change reception processing, and then executes the third display processing of displaying, on the display screen, the fifth image obtained by converting the second image based on the acquisition condition after change.

Accordingly, the user who is accustomed to the setting of the acquisition condition of the image (imaging condition) in the real space can change as appropriate the acquisition condition after the image acquisition to smoothly acquire the image according to the user's preference.

Further, after the acquisition condition of the second image is estimated in the real space in the estimation processing, the processor 21 executes the fourth change reception processing of receiving the change to the second image setting condition. Further, the processor executes the fourth change reception processing, and then executes the fourth display processing of displaying, on the display screen, the sixth image obtained by converting the second image based on the second image setting condition after change.

Accordingly, the user who is accustomed to the setting of the image setting condition in the virtual space can change as appropriate the image setting condition after the image acquisition to smoothly acquire the image according to the user's preference.

The processor 21 executes the saving processing of saving the acquired image in association with the acquisition condition of the image in the real space.

Accordingly, the user can use the acquired image and the acquisition condition. For example, even after some time has passed after the imaging, it is possible to edit the acquired image using the acquisition condition. Alternatively, with sharing of the acquired image and the acquisition condition between the users, it is possible to use the shared information as a reference in a case where the image acquisition is performed next time.

### <<Other embodiments>>

In the information processing system S, the information processing apparatus 10 may be configured of the server computer, but the present invention is not limited thereto. For example, the information processing apparatus according to the embodiment of the present invention may be configured of the user terminal.

The information processing apparatus according to the embodiment of the present invention and the processor included in the information processing apparatus include various processors. Examples of the various processors include a CPU, which is a general-purpose processor that executes software (program) and functions as various processing units.

Further, various processors include a programmable logic device (PLD), which is a processor whose circuit configuration can be changed after manufacturing, such as a field programmable gate array (FPGA).

Furthermore, the various processors include a dedicated electric circuit, which is a processor having a circuit configuration specially designed to perform specific processing, such as an application specific integrated circuit (ASIC).

Further, the information processing apparatus according to the embodiment of the present invention and one processing unit provided in the information processing apparatus may be configured of one of the various processors described above, or may be configured of a combination of two or more processors of the same type or different types, for example, a combination of a plurality of FPGAs or a combination of an FPGA and a CPU.

Further, a plurality of functional units included in the information processing apparatus according to the embodiment of the present invention may be configured of one of the various processors, or may be configured of one processor by integrating two or more of the plurality of functional units.

Further, as in the above embodiment, a form may be employed in which one processor is configured of a combination of one or more CPUs and software, and the processor functions as the plurality of functional units.

Further, for example, as represented by a system on chip (SoC) or the like, a form may be employed in which a processor is used in which the functions of the entire system including the information processing apparatus according to the embodiment of the present invention and the plurality of functional units in the information processing apparatus are realized by one integrated circuit (IC) chip. Further, a hardware configuration of the various processors described above may be an electric circuit (circuitry) in which circuit elements, such as semiconductor elements, are combined.

### Explanation of References

10: information processing apparatus
11: database server
21: processor
22: memory
23: interface for communication
24: storage device
31: acquisition processing unit
32: estimation processing unit
33: change reception unit
34: display processing unit
35: saving processing unit
100: user terminal
N: network
S: information processing system

## Claims

1. An information processing apparatus comprising a processor,
wherein the processor is configured to execute:
acquisition processing of acquiring an image based on at least a part of display data constituting a display of a virtual space; and
estimation processing of estimating, in a case where the image is assumed to be acquired in a real space, an acquisition condition of the image in the real space.

2. The information processing apparatus according to claim 1,
wherein the image is a first image obtained by imaging in the virtual space, or a second image obtained by a record of a display screen of the virtual space.

3. The information processing apparatus according to claim 1,
wherein the processor is configured to:
in the estimation processing, estimate the acquisition condition of the image in the real space using a trained model generated by machine learning in advance.

4. The information processing apparatus according to claim 2,
wherein the processor is configured to:
in the acquisition processing, receive a first image setting condition for acquiring the first image; and
in the estimation processing, estimate the acquisition condition of the first image in the real space based on at least one of the first image or the first image setting condition.

5. The information processing apparatus according to claim 4,
wherein the processor is configured to:
in the estimation processing, estimate the acquisition condition of the first image in the real space, using a trained model created by machine learning in advance, based on at least one of the first image or the first image setting condition.

6. The information processing apparatus according to claim 4,
wherein the processor is configured to:
in the estimation processing, estimate the acquisition condition of the first image in the real space, by an optical simulation using the first image setting condition and information related to a subject displayed in the first image.

7. The information processing apparatus according to claim 4,
wherein the processor is configured to further execute:
after the acquisition condition of the first image is estimated in the real space in the estimation processing, first change reception processing of receiving a change to the estimated acquisition condition of the first image; and
first display processing of displaying, on the display screen, a third image obtained by converting the first image, based on the acquisition condition after the change, after the first change reception processing.

8. The information processing apparatus according to claim 4,
wherein the processor is configured to further execute:
after the acquisition condition of the first image is estimated in the real space in the estimation processing, second change reception processing of receiving a change to the first image setting condition; and
second display processing of displaying, on the display screen, a fourth image obtained by converting the first image, based on the first image setting condition after the change, after the second change reception processing.

9. The information processing apparatus according to claim 2,
wherein the processor is configured to:
in the acquisition processing, receive a second image setting condition for acquiring the second image; and
in the estimation processing, estimate the acquisition condition of the second image in the real space based on at least one of the second image or the second image setting condition.

10. The information processing apparatus according to claim 9,
wherein the processor is configured to:
in the estimation processing, estimate the acquisition condition of the second image in the real space, using a trained model created by machine learning in advance, based on at least one of the second image or the second image setting condition.

11. The information processing apparatus according to claim 9,
wherein the processor is configured to:
in the estimation processing, estimate the acquisition condition of the second image in the real space, by an optical simulation using the second image setting condition and information related to a subject displayed in the second image.

12. The information processing apparatus according to claim 9,
wherein the processor is configured to further execute:
after the acquisition condition of the second image is estimated in the real space in the estimation processing, third change reception processing of receiving a change to the estimated acquisition condition of the second image; and
third display processing of displaying, on the display screen, a fifth image obtained by converting the second image, based on the acquisition condition after the change, after the third change reception processing.

13. The information processing apparatus according to claim 9,
wherein the processor is configured to further execute:
after the acquisition condition of the second image is estimated in the real space in the estimation processing, fourth change reception processing of receiving a change to the second image setting condition; and
fourth display processing of displaying, on the display screen, a sixth image obtained by converting the second image, based on the second image setting condition after the change, after the fourth change reception processing.

14. The information processing apparatus according to claim 1,
wherein the processor is configured to:
further execute saving processing of saving the acquired image in association with the acquisition condition of the image in the real space.

15. An information processing method executed by a processor, the method comprising:
acquisition processing of acquiring an image based on at least a part of display data constituting a display of a virtual space; and
estimation processing of estimating, in a case where the image is assumed to be acquired in a real space, an acquisition condition of the image in the real space.

16. A program for causing a computer to execute each piece of processing included in the information processing method according to claim 15.

17. A computer-readable recording medium on which a program for causing a computer to execute each piece of processing included in the information processing method according to claim 15 is recorded.
